# EUROPÄISCHE PATENTSCHRIFT

(11) **EP 0 409 935 B1**
(45) Veröffentlichungstag und Bekanntmachung des Hinweises auf die Patenterteilung: **28.09.1994**
(21) Anmeldenummer: 90901547.1
(22) Anmeldetag: 15.01.1990
(51) Int. Cl.: G04C 23/02, H01H 43/02

(54) **ELEKTROMECHANISCHE SCHALTUHR**
ELECTROMECHANICAL TIMER SWITCH
MINUTERIE ELECTROMECANIQUE

(30) Priorität: 04.02.1989 DE 8901270 U; 04.02.1989 DE 8901269 U
(43) Veröffentlichungstag der Anmeldung: 30.01.1991
(73) Patentinhaber: GRÄSSLIN KG, D-78112 St. Georgen (DE)
(72) Erfinder: SCHONHARDT, Peter, D-7731 Unterkirnach (DE); BÄCHLE, Werner, D-7730 VS-Pfaffenweiler (DE)
(74) Vertreter: Thoma, Friedrich, Dipl.-Ing.(FH)
(86) Internationale Anmeldenummer: DE9000016
(87) Internationale Veröffentlichungsnummer: WO9008986

(56) Entgegenhaltungen:
- DE-A- 2 542 107
- DE-U- 8 901 269
- DE-U- 8 901 270
- FR-A- 2 173 168

## Beschreibung

Die Erfindung betrifft eine elektromechanische Schaltuhr mit den Merkmalen im Oberbegriff des Patentanspruchs 1.

Bei derartigen Schaltuhren ist es erforderlich, daß die manuell betätigbare Schaltvorrichtung, mit der die elektrische Kontaktanordnung unabhängig vom zeitgesteuerten Schaltprogramm, ein-, aus- oder auf die Zeitsteuerung geschaltet werden kann, nicht nur überssichtlich, sondern auch bedienungstechnisch sinnvoll und in der Herstellung wirtschaftlich, auf der Schaltuhrvorderseite angeordnet ist. Dabei soll sichergestellt sein, daß durch die Anordnung auf der Schaltuhrvorderseite die Montage- und Befestigungsvorrichtungen an der Schaltuhr, durch die manuelle Schaltvorrichtung nicht beeinträchtigt werden. Außerdem soll sichergestellt sein, daß die Montage- und Befestigungsvorrichtungen nicht nur einfach in ihrem technischen Aufbau und wirtschaftlich in der Herstellung und der Montage in einem Einbaugehäuse sind, sondern daß mit einer solchen Vorrichtung die Schaltuhr in einen Einbauausschnitt einer Schalttafel oder einer sonstigen Tragfläche einer Anlage oder Maschine axial spielfrei befestigt werden kann. Diese Befestigungsvorrichtung soll dabei nicht nur einen einfachen und rationellen Einbau, sondern auch ein Aufbau eines entsprechenden Gehäuses ermöglichen.

Die bekanntgewordenen, auf der Schaltuhrvorderseite angeordneten, manuell betätigbaren Schaltvorrichtungen, sind überwiegend außerhalb des Programmrings oder der Programmscheibe, häufig in einem Eckbereich eines, in der Regel quadratischen, Gehäuses vorgesehen.

Diese Anordnung der manuellen Schaltvorrichtung außerhalb des Programmrings oder der Programmscheibe, insbesondere im Gehäuseeckbereich, ist mit dem erheblichen Nachteil verbunden, daß in diesem Bereich weder eine Montage-, noch eine schaltuhrinterne, technisch vielfach unumgänglich notwendige Befestigungsvorrichtung angeordnet werden kann.

Außerdem ist es bekannt, daß zur Befestigung von Einbaugehäusen in entsprechenden Einbauausschnitten, an den Seitenwänden der Gehäuse angeordnete, nockenförmige Befestigungselemente, häufig einstückig, vorgesehen sind, die mit einem Federelement ausgestattet, beim Einschieben des Gehäuses in einen entsprechenden Einbauausschnitt, mit den nockenförmigen Befestigungselementen hinter die rückseitigen Kanten des Einbauausschnitts der Tragfläche schnappen. Diese Befestigungsvorrichtungen sind dort an zwei, einander gegenüberliegenden Seitenwänden angeordnet.

Diese Befestigungsvorrichtungen sind mit dem erheblichen Nachteil behaftet, daß die Wanddicken zwischen den vorder- und den rückseitigen Kanten eines Einbauausschnitts vielfach nur in relativ kleinen Dickenunterschieden stufenlos erfaßt werden können, zur spielfreien Befestigung eines entsprechenden Einbaugehäuses. Außerdem ist dort von Nachteil, daß beim Ausbau eines Gerätes, insbesondere wenn die Einbauausschnittrückseite nicht zugänglich ist, das Gehäuse beschädigt werden muß.

Der Erfindung liegt die Aufgabe zugrunde, die Nachteile der schaltuhrvorderseitigen Anordnung der manuell betätigbaren Schaltvorrichtung zu beseitigen und diese manuelle Schaltvorrichtung im Bereich der Schaltuhrvorderseite derart anzuordnen, daß die erforderlichen Montage-und Befestigungsvorrichtungen nicht beeinträchtigt werden und insbesondere die, auf der Schaltuhrvorderseite notwendigen, Zeitableseskalen und Schaltstellungssymbole für den Betätiger, herstellungstechnisch zusammengefaßt werden können. Außerdem soll die Befestigungsvorrichtung so beschaffen sein, daß relativ große Dickenunterschiede zwischen der vorder- und der rückseitigen Kante der Einbauausschnitte spielfrei erfaßt werden können. Eine derartige Befestigungsvorrichtung soll einfach und wirtschaftlich in der Herstellung und der Montage sein.

Diese Aufgabe wird mit den Merkmalen im kennzeichnenden Teil des Patentanspruchs 1 gelöst und in den Unteransprüchen sind weitere vorteilhafte Merkmale beansprucht.

Vorteilhaft bei der Anordnung des Betätigers der manuellen Schaltvorrichtung im Bereich innerhalb des Programmrings ist nicht nur, daß dadurch der gesamte Flächenbereich außerhalb des Programmrings auf der Schaltuhrvorderseite für Montage- und schaltuhrinterne Befestigungsvorrichtungen frei ist, sondern auch, daß diese im wesentlichen drucktechnisch hergestellten Zeitableseskalen und Schaltstellungssymbole, äußerst wirtschaftlich auf einer einzigen, insbesondere als Ring ausgebildeten, schaltuhrvorderseitigen Stirnfläche angeordnet werden können. Vorteilhaft ist ferner die zweckmäßige Befestigungsvorrichtung die es nicht nur ermöglicht, mit dem dort vorgesehenen abgefederten Riegel sehr große Dickenunterschiede in der Wandstärke eine Einbauausschnitts stufenlos und spielfrei zu bewältigen, sondern daß ein Gehäuse rationell ein- und/oder ausbaubar ist. Dabei können derartige Riegel sowohl in einstückiger oder in mehrstückiger Ausführung rationell und wirtschaftlich hergestellt, montiert und bedient werden.

Ein Ausführungsbeispiel der Neuerung ist in der Zeichnung dargestellt und wird im folgenden näher erläutert. Es zeigen
- Fig. 1: eine Ansicht der Schaltuhrvorderseite,
- Fig. 2: eine Ansicht auf das Schaltuhrinnere, bei abgenommener Schaltuhrvorderplatine,
- Fig. 3: eine Vorderansicht auf ein Einbaugehäuse mit einer Schaltuhr mit in zwei, einander gegenüberliegenden Ecken vorgesehene Riegel-Befestigungsvorrichtungen,
- Fig. 4: eine Teilquerschnittsansicht durch einen Eckbereich eines Einbaugehäuses und
- Fig. 5: eine Längsschnittansicht durch ein Einbaugehäuse, dasin einem Einbauausschnitt befestigt ist.

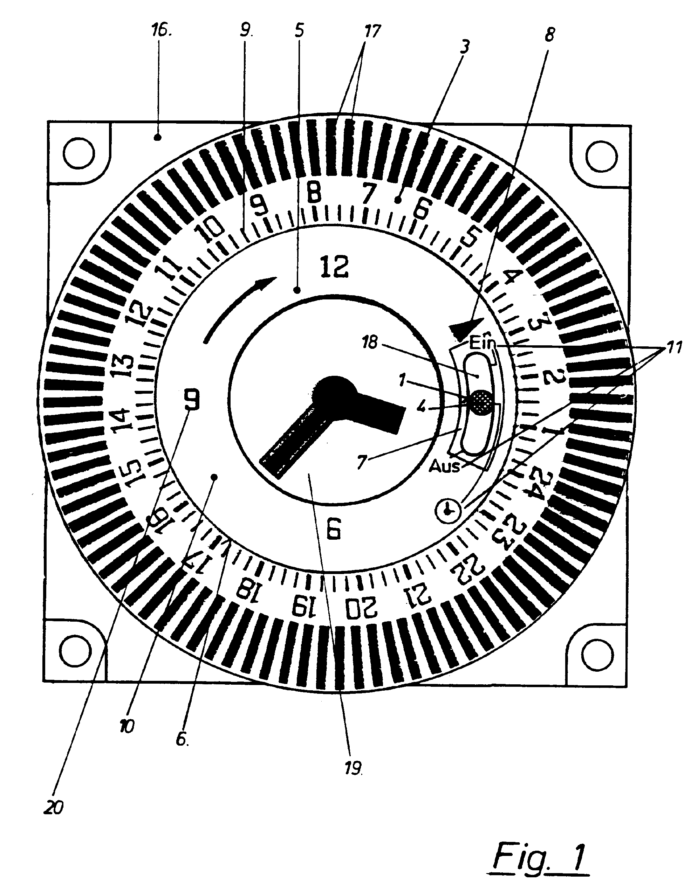

Die, in der Fig. 1, dargestellte Schaltuhrvorderseite 16 einer analogen, elektromechanischen, Schaltuhr, zeigt im einzelnen mit 3 den zeitgesteuert umlaufenden Programmring mit den dort, zum Zwecke der der Programmierung, radial verschwenkbaren Schaltreiter 17. 10 bezeichnet einen gehäusestationär gelagerten Ring, der einerseits den Programmring 3 axial vorderseitig mit einer Lagerbegrenzung 6 fixiert und der andererseits, auf seiner Stirnseite 5 Zeitbezugsmarken 8 für die Skala 9 des Programmrings 3 und Schaltsymbole 11 für den, im Bereich dieses Rings 10, verschwenkbar gelagerten, Betätigers 1 der manuellen Schaltvorrichtung trägt.

Wie die Fig. 1 zeigt, ist dort der Betätiger 1 kreisförmig verschwenkbar, in einer kreisförmig verlaufenden Ausnehmung 18 im Ring 10 geführt. 7 bezeichnet eine, zur Stirnseite 5 zurückgesetzte, Mulde, in der der Betätiger 1 verläuft, d.h. die Stirnseite 4 des Betätigers 1 ist entweder mit der Stirnseite 5 des Rings 10 bündig, oder liegt hinter dieser zurück. 19 bezeichnet eine, innerhalb des Rings 10 liegende Stunden- und Minutenzeigeranordnung, zur Anzeige der Tageszeit, die an der Skala 20 auf dem Ring 10 abgelesen werden kann.

Es liegt im Rahmen der Neuerung, daß anstelle der Stunden- und Minutenzeigeranordnung 19, der Ring 10 auf seiner Stirnseite 5 auch scheibenförmig eben, oder vertieft abgesetzt, geschlossen sein kann.

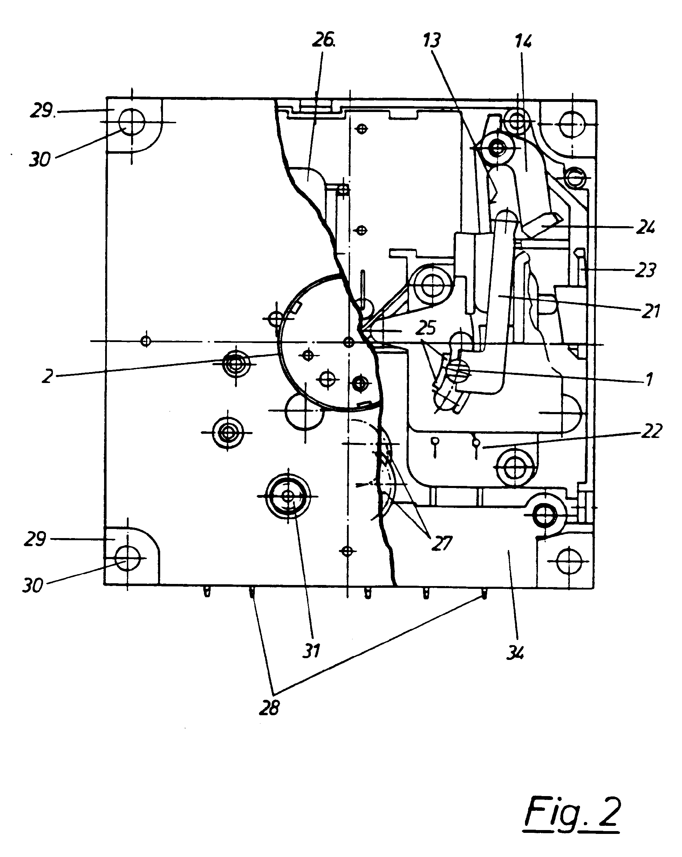

Aus der Fig. 2 ist der Betätiger 1 an einem Betätigerhebel 21 ersichtlich. dieser Hebel 21 ist in einer Kulisse 13 einer Zwischenplatine 14 geführt, die insbesondere der Fixierung und Befestigung der elektrischen Kontaktanordnung 22, eines Mikroschalters, dient. 23 bezeichnet den Kontaktbetätigungshebel und 24 zeigt den Schalthebel, der von den hier nicht dargestellten Schaltreitern 17, aus der Fig. 1, beaufschlagt wird. 24 kennzeichnet das Gehäuse der Schaltuhr.

Die Fig. 2 zeigt desweiteren, einstückig an der Zwischenplatine 14 vorgesehene, insbesondere, federnde Rastelemente 25, welche zur Lagensicherung des Betätigerhebels 21 vorgesehen sind. 26 bezeichnet einen Antriebsmotor als Zeitbasis der Schaltuhr, der über ein Zahnradgetriebe 27 den Programmring antreibt. 28 bedeutet den elektrischen Installationsanschlußport und 30 zeigt insbesondere an allen vier Gehäuseekken 29 vorgesehenehene Montagebefestigungslöcher, die sowohl für eine Einbau-, als auch für eine Aufbaumontage der Schaltuhr verwendbar sind.

Aus der Fig. 2 ist außerdem auch die Nabe 2 ersichtlich, auf der der Programmring 3, aus der Fig. 1, gelagert ist. 31 bezeichnet das Antriebsritzel für den Programmring.

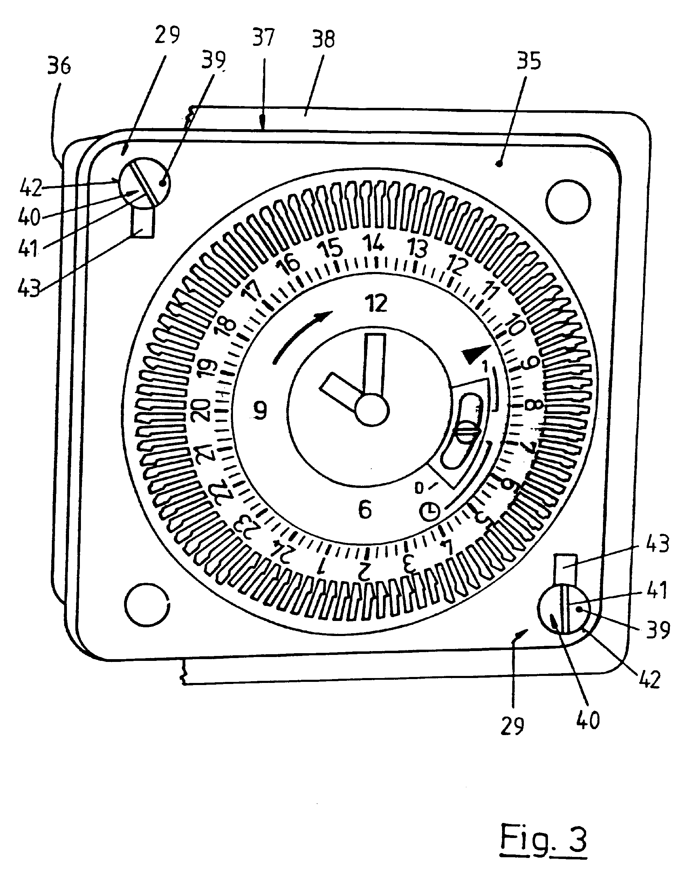

Auf der, in der Fig. 3 dargestellten, Gehäusevorderseite 35 einer, in einem Einbaugehäuse 36 angeordneten Schaltuhr, sind im Bereich der Gehäuseecken 29 einander diagonal gegeüberliegend, die Vorrichtungen zur Befestigung des Einbaugehäuses 36 in einem Einbauausschnitt 37, beispielsweise einer Schalttafel 38, angeordnet. Diese Vorrichtungen bestehen dort im einzelnen aus einem einseitig in der Gehäusevorderseite 35 gelagerten Bolzen 39, der auf seiner Stirnseite 40 mit einem Schlitz 41 für den Eingriff eines Schraubendrehers versehen ist.

Wie die Fig. 3 desweiteren zeigt, ist der Umfang der Führungslöcher 42 zur Lagerung der Bolzen 39 von einer Nut 43 unterbrochen, welche dazu dient, den Riegel 44 durch die Nut 43 in das Führungsloch 42 funktionskonform einzusetzn.

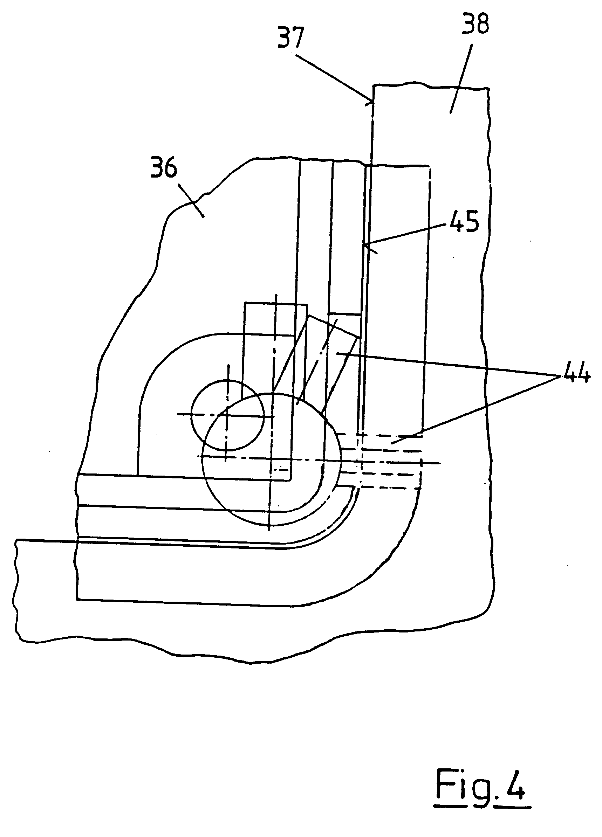

Die Fig. 4 zeigt die Lage des Riegels 44 sowohl in entriegelter, in der Gehäuse-Seitenwand 45 völlig versenkter Lage, als auch in, um ca. 75° herausgeschwenkter, zur Seitenwand 45 hinreichend senkrecht stehender, punktiert gezeichneter Lage. 36 bezeichnet das Gehäuse und 37 den Einbauausschnitt, beispielsweise in einer Schalttafel 38.

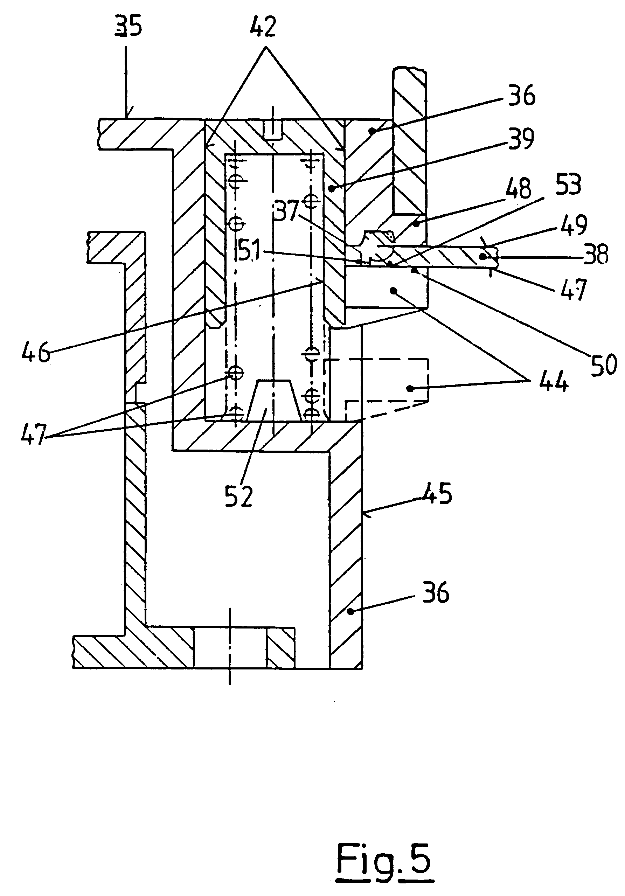

Aus der Fig. 5 ist das einstückige Ausführungsbeispiel des Riegels 44, in Verbindung mit dem einseitig angeordneten Bolzen 39 erkennbar, das aus einem Kunststoff hergestellt sein kann. Das Teil 44, 39 ist in dem Führungsloch 42 gelagert, das als sogenanntes Sackloch ausgebildet sein kann. Dieses Teil 44, 39 ist außerdem im Bereich des Bolzens 39 mit einer koaxial verlaufenden Bohrung 46 versehen, in der eine Feder 47 das Teil 44, 39 axial zur Gehäusevorderseite 35 hin drückt. Damit wird gewährleistet, daß der Riegel 44 in der gezeigten ausgeschwenkten Lage, gegen die Unterseite 47 der Schalttafel 38 gepresst wird. Damit wird sichergestellt, daß das Einbaugehäuse 36 mit seinem, zu den Seitenwänden 45 erhaben umlaufenden Rand 48 gegen die Vorderseite 49 der Schalttafel 38 gezogen wird. Eine absolut axial spielfreie Befestigung wird hierdurch sichergestellt.

Die Fig. 5 zeigt anschaulich den relativ großen Wirkbereich des Riegels 44 hinsichtlich der dort möglichen Dicke einer Schalttafel 38.

Der Riegel 44 ist im Bereich seiner sogenannten Einschwenkkante 53 mit einer Schräge 50 versehen, welche ein sicheres Finden der Kante 51 des Einbauausschnittes 37 ermöglicht. 52 bezeichnet einen einseitig im Führungsloch 42 angeordneten, koaxial verlaufenden, konisch ausgebildeten Führungsstift, für die Feder 47.

Es ist vorgesehen, daß das Teil 44, 39 auch aus zwei Einzelteilen hergestellt sein kann, und daß die Teile 44 und 39 über ein Gewinde miteinander in Eingriff stehen. Damit kann gewährleistet werden, daß nach dem Einschwenken des Riegels 44 hinter die Unterseite 47 der Schalttafel 38, der Lagerbolzen 39 über den Schlitz 41 weitergedreht wird und dabei der Riegel 44 gegen die Unterseite 47 hinreichend kraftschlüssig angezogen werden kann. Zum Lösen und Entriegeln des Gehäuses 36 wird der Bolzen 39 in die andere Richtung gedreht, bis der Riegel 44 an seinem unteren Anschlag angelangt und in das Gehäuseinnere, an einen Anschlag, eingeschwenkt ist. Die Feder 47 könnte in diesem Ausführungsfalle entfallen.

## Patentansprüche

1. Elektromechanische Schaltuhr mit einem, auf einer einseitig befestigten Nabe drehbar gelagerten, zeithaltend umlaufenden, Programmring, mit auf dem Programmring angeordneten, programmierbaren Schaltreitern, welche schaltprogrammkonform eine elektrische Kontaktanordnung beaufschlagen, mit einer manuell betätigbaren, mit einem zapfenförmigen, verschwenkbaren Betätiger versehenen, auf der Vorderseite der Schaltuhr, dem Programmring benachbart, angeordneten, Schaltvorrichtung mit der die elektrische Kontaktanordnung, unabhängig vom Schaltprogramm, betätigt werden kann und mit nockenförmigen Befestigungselementen zur Befestigung des Einbaugehäuses mit der Schaltuhr in Schalttafeln oder sonstigen Tragflächen, **dadurch gekennzeichnet**, daß die Schaltvorrichtung mit dem Betätiger (1) innerhalb der Nabe (2) und damit innerhalb des Programmrings (3) verlaufend angeordnet ist.

2. Schaltuhr nach Anspruch 1, dadurch gekennzeichnet, daß der Betätiger (1) kreisförmig verschwenkbar gelagert ist.

3. Schaltuhr nach Anspruch 1 und 2, dadurch gekennzeichnet, daß der Betätiger (1) mit seiner Stirnseite (4), mit der Stirnseite (5) des Rings (10) bündig, oder hinter der Stirnseite (5) zurückliegend, insbesondere in einer kreisförmig verlaufenden Mulde (7), verschwenkbar angeordnet ist.

4. Schaltuhr nach Anspruch 1 bis 3, dadurch gekennzeichnet, daß die Stirnseite (5) als Ring (10) ausgebildet, stationär gelagert ist, und daß innerhalb des Rings (10) eine, die Tageszeit anzeigende, Stunden- und Minutenzeigeranordnung (19) vorgesehen ist.

5. Schaltuhr nach Anspruch 1, dadurch gekennzeichnet, daß der Betätiger (1) mit einem schaltuhrinternen Hebel (12) versehen ist, der in einer Kulisse (13) einer Zwischenplatine (14) der elektrischen Kontaktanordnung (15) geführt ist.

6. Schaltuhr nach einem der Ansprüche 1 bis 5, dadurch gekennzeichnet, daß auf mindestens zwei, einander gegenüberliegenden Seitenwänden (45) eines Einbaugehäuses (36) ein, aus der jeweiligen Seitenwand (45) herausschiebbarer oder herausdrehbarer, nockenförmiger Riegel (44) angeordnet ist, der im Einbaugehäuse (36) gelagert und insbesondere von der Gehäusevorderseite (35) bedienbar ist.

7. Schaltuhr nach Anspruch 6, dadurch gekennzeichnet, daß der Riegel (44) in der Seitenwand (45) gänzlich versenkbar gelagert ist.

8. Schaltuhr nach Anspruch 6 und 7, dadurch gekennzeichnet, daß der Riegel (44) gehäuseaxial federnd gelagert ist.

9. Schaltuhr nach Anspruch 6 bis 8, dadurch gekennzeichnet, daß der Riegel (44) einstückig, insbesondere einseitig mit einem Betätigungs- und Lagerbolzen (39) versehen ist, der unmittelbar in der Gehäusevorderseite (35) des Einbaugehäuses (36) geführt ist, und daß auf der Stirnseite (40) des Lagerbolzens (39) ein Schlitz (41) für den Eingriff eines Schraubendrehers vorgesehen ist.

10. Schaltuhr nach Anspruch 6 bis 9, dadurch gekennzeichnet, daß auf der Gehäusevorderseite (35) eine, zum Führungsloch (42) hin offene Nut (43) für den Eingriff des Riegels (44) vorgesehen ist.

## Claims

1. Electromechanical time switch with a time-keeping revolving programme ring mounted pivotably on a hub fastened on one side, with programmable switching trips which are arranged on the programme ring and act upon an electrical contact arrangement in conformity with the switching programme, with a manually actuatable switching device which is provided with a peg-shaped pivoting control and arranged on the front side of the time switch next to the programme ring and with which the electrical contact arrangement can be actuated independently of the switching programme, and with cam-shaped fastening elements to fasten the housing with the time switch for recessed mounting in control panels or other supporting surfaces, characterised in that the switching device is arranged with the control (1) running inside the hub (2) and thus inside the programme ring (3).

2. Time switch according to claim 1, characterised in that the control (1) is mounted pivotable in an arc.

3. Time switch according to claim 1 and 2, characterised in that the control (1) is arranged pivotably with its front side (4) flush with the front side (5) of the ring (10) or lying behind the front side (5), in particular in a hollow (7) running in an arc.

4. Time switch according to claims 1 to 3, characterised in that the front side (5) is mounted statically, embodied as a ring (10), and in that an hours and minutes indicating arrangement (19) indicating the time of the day is provided inside the ring (10).

5. Time switch according to claim 1, characterised in that the control (1) is provided with a lever (12) which is disposed inside the time switch and is guided in a slide (13) of an intermediate plate (14) of the electrical contact arrangement (15).

6. Time switch according to one of claims 1 to 5, characterised in that on at least two opposing side walls (45) of a housing (36) for recessed mounting there is a cam-shaped catch (44) which can be slid or rotated out of the side wall (45) in question and is mounted in the housing (36) for recessed mounting and in particular can be operated from the front side (35) of the housing.

7. Time switch according to claim 6, characterised in that the catch (44) is mounted so that it can be fully countersunk in the side wall (45).

8. Time switch according to claims 6 and 7, characterised in that the catch (44) is mounted resilient axially in relation to the housing.

9. Time switch according to claims 6 to 8, characterised in that the catch (44) is provided in one piece, in particular on one side with an actuating and mounting pin (39) which is guided directly in the front side (35) of the housing (36) for recessed mounting, and in that a slot (41) is provided on the front side (40) of the mounting pin (39) for engagement of a screwdriver.

10. Time switch according to claims 6 to 9, characterised in that a slot (43) open towards the locating hole (42) is provided for engagement of the catch (44) on the front side (35) of the housing.

## Revendications

1. Horloge de programmation électromécanique pourvue d'un segment programmeur, à rotation synchronisée, monté de manière rotative sur un moyeu fixe d'un seul côté, comportant, disposés sur ce segment programmeur, des taquets programmables qui agissent, en conformité avec le programme, sur un contacteur électrique, comportant un dispositif de programmation disposé sur la face avant de l'horloge au voisinage du segment programmeur, muni d'une commande pivotable en forme de pivot, actionnable manuellement, lequel dispositif programmeur pouvant actionner le contacteur électrique indépendamment du programme, et comportant des éléments de fixation en forme d'ergots pour la fixation du boîtier de montage contenant l'horloge à l'intérieur de tableaux de commande ou autres surfaces portantes, caractérisée en ce que le dispositif programmeur comportant la commande (1) est disposé à l'intérieur du moyeu (2) et donc de manière à s'étendre à l'intérieur du segment programmeur (3).

2. Horloge selon la revendication 1, caractérisée en ce que la commande (1) est montée de manière pivotable circulairement.

3. Horloge selon les revendications 1 et 2, caractérisée en ce que la commande (1) est disposée de manière pivotable, sa face frontale (4) venant s'aligner sur la face frontale (5) du segment (10), ou se place en retrait derrière cette face frontale (5), en particulier à l'intérieur d'une moulure (7) s'étendant circulairement.

4. Horloge selon les revendications 1 à 3, caractérisée en ce que la face frontale (5) est réalisée en forme de segment (10), est montée de manière fixe, et qu'à l'intérieur du segment (10) est prévu un dispositif indicateur (19) affichant l'heure du jour en heures et en minutes.

5. Horloge selon la revendication 1, caractérisée en ce que la commande (1) est munie d'un levier (12) interne à l'horloge, laquelle est guidée dans une coulisse (13) d'une platine intermédiaire (14) du contacteur électrique (15).

6. Horloge selon l'une des revendications 1 à 5, caractérisée en ce que, sur au moins deux parois latérales (45) se faisant face mutuellement, est disposée une barrette de verrouillage (44) en forme d'ergot pouvant être extraite par rotation ou par coulissement de la paroi latérale respective (45), barrette de verrouillage montée à l'intérieur du boîtier (36) et manoeuvrable, en particulier, par la face avant (35) de ce boîtier.

7. Horloge selon la revendication 6, caractérisée en ce que la barrette de verrouillage (44) est montée dans la paroi latérale (45), de manière à s'y intégrer totalement.

8. Horloge selon les revendications 6 et 7, caractérisée en ce que la barre de verrouillage (44) est montée de manière élastique axialement par rapport au boîtier.

9. Horloge selon les revendications 6 à 8, caractérisée en ce que la barre de verrouillage (44) est munie, en particulier d'un côté, d'une tige (39) de commande et de montage avec laquelle elle constitue une seule pièce, cette tige passant directement dans le côté avant (35) du boîtier (36), et en ce que, sur la face frontale (40) de la tige (39), est prévue une fente (41) pour l'insertion d'un tournevis.

10. Horloge selon les revendications 6 à 9, caractérisée en ce que, sur la face avant (35) du boîtier, est prévue une rainure (43) ouverte en direction du trou de guidage (42) pour l'insertion de la barre de verrouillage (44).
